# EUROPÄISCHE PATENTANMELDUNG

(11) **EP 0 645 941 A2**
(43) Veröffentlichungstag der Anmeldung: **29.03.1995**
(21) Anmeldenummer: 94115066.6
(22) Anmeldetag: 23.09.1994
(51) Int. Cl.: H04Q 7/32, H04Q 7/22

(54) **Funkgerät zum Senden und Empfangen von Kurznachrichten**

(30) Priorität: 25.09.1993 DE 4332758
(71) Anmelder: Alcatel SEL Aktiengesellschaft, D-70435 Stuttgart (DE); ALCATEL N.V., NL-1077 XX Amsterdam (NL)
(72) Erfinder: Diez, Helmut, D-71296 Heimsheim (DE); Klumpp, Dieter, D-70193 Stuttgart (DE)
(74) Vertreter: Knecht, Ulrich Karl

(57) **Zusammenfassung**

Im GSM-Netz ist ein Kurznachrichten-Dienst (engl.: Short Message Service, SMS) spezifiziert.

Das erfindungsgemäße Funkendgerät ist so ausgelegt, daß es nur zum Senden und Empfangen von Kurznachrichten nach dem GSM-Standard geeignet ist. Eine Sprachübertragung ist nicht möglich.

## Beschreibung

Die Erfindung betrifft die Funk-Übertragung von Kurznachrichten.

Für den Dienst der Kurznachrichten-Übertragung gibt es Funkrufsysteme, in denen Funkendgeräte zum Empfangen von Kurznachrichten eingesetzt werden; sie sind z.B. bekannt aus: R. Stadelmann, et al, "Ermes - Das europäische Funkrufsystem", Bulletin Technique PTT 6/1992, Seiten 214 bis 217.

Zu den dort eingesetzten Funkendgeräten, die Funkrufempfänger sind, können Nur-Ton-Rufe, Numerikrufe, Alphanumerikrufe und transparente Datenrufe übertragen werden. Mit diesen mit einer Anzeige ausgestatteten Funkrufempfängern ist somit das Senden von Kurznachrichten nicht möglich, sondern nur der Empfang von Kurznachrichten.

Für Anwendungen, die das Senden und Empfangen von ausschließlich Kurznachrichten erfordern, sind diese bekannten Funkrufempfänger nicht verwendbar.

Es gibt bei manchen im bekannten GSM-Netz betriebenen Mobiltelefonen, die den eigentlichen Telefondienst nutzen, die Möglichkeit, Kurznachrichten zu übertragen. Im GSM-Netz ist ein Kurznachrichten-Dienst (engl.: Short Message Service, SMS) spezifiziert, in dem Kurznachrichten von bis zu 160 alphanumerischen Zeichen übertragen werden können. Die technische Realisation beschreibt z.B. die GSM-Spezifikation 03.40. - Version 4.5.0. Eine allgemeinere Beschreibung des Kurznachrichten-Dienstes ist bekannt aus: T. Taylor, "The GSM Short Message Service", Pan-European Mobile Communications, Issue 13, Spring 1993, Seiten 72 bis 75.

Dieser Kurznachrichten-Dienst ist im GSM-Netz ein zusätzlicher Dienst, der neben der üblicherweise ausgeführten Sprachübertragung (Telefondienst) angeboten wird.

Die Übertragung erfolgt dort im Gegensatz zu den Funkrufempfängern bidirektional, d.h. von Vermittlungsstation zu Mobilstation und umgekehrt. Neben dieser Punkt-zu-Punkt Übertragung ist auch eine Punkt-zu-Multipunkt Übertragung, d.h. eine Übertragung von einer Feststation zu mehreren Mobilstationen, vorgesehen.

Für Anwendungen, die ausschließlich das Senden und Empfangen von Kurznachrichten erfordern, sind die bekannten Mobiltelefone, z.B. aus: J. Bursztejn, "GSM-Endgeräte", Elektrisches Nachrichtenwesen, 2. Quartal 1993, Seiten 128 bis 140, wegen ihrer eigentlichen Aufgabe der Sprachübertragung zu aufwendig. Außerdem lassen sich diese Mobiltelefone nicht für individuelle Anwendungen, z.B. Einbau in oder Anschluß an vorhandene Peripherie einsetzen.

Eine Aufgabe der Erfindung ist, ein Funk-Sende-Empfangsgerät zum Senden und Empfangen von Kurznachrichten anzugeben.
Diese Aufgabe wird erfindungsgemäß durch die technischen Lehren gemäß der nebengeordneten Ansprüche 1, 4 und 6 gelöst. Weiterbildungen des Gegenstandes der Erfindung sind den Unteransprüchen zu entnehmen.

Vorteilhaft an der Erfindung ist, daß die Funk-Sende-Empfangsgeräte preisgünstiger sind, da sie mit reduziertem Aufwand an Hard- und Software hergestellt werden; z.B. ist kein aufwendiges, nach ergonomischen Gesichtspunkten geformtes Gehäuse notwendig. Ein weiterer Vorteil der Erfindung ist, daß die an das Funk-Sende-Empfangsgerät anschließbare Peripherie teilnehmerindividuell angepaßt werden kann. Das Funk-Sende-Empfangsgerät kann z.B. als Steckeinschub mit der Peripherie verbunden werden. Das erfindungsgemäße Funk-Sende-Empfangsgerät ist somit ein universelles Sende- und Empfangsgerät, an das teilnehmerindividuelle Mittel zur Ein- und Ausgabe der Kurznachrichten angeschlossen sind.

Ein weiterer Vorteil besteht darin, ein nur für Paketdatennachrichtendienste realisiertes Funk-Sende-Empfangsgerät für alle sogenannten Non-Voice-Dienste, insbesondere für Bearer-Dienste oder Faxübertragungen zur Verfügung zu haben, so daß alle für die Sprachübertragung notwendigen aufwendigen Baugruppen entfallen können. Ein solches Funk-Sende-Empfangsgerät kann besonders vorteilhaft über eine PCMCIA-Schnittstelle (Personal Computer Memory Card International Association) mit zusätzlichen Software-Modulen verbunden werden, um z.B. für Geschäftsleute, die sehr oft auf Reisen sind, jederzeit Terminplaner/Notizbuch/Adreßbuchfunktionen zur Verfügung zu stellen und diese so erstellten Nachrichten jederzeit per Funkübertragung z.B. mit dem Personal Computer im Büro zum Aktuallisieren austauschen zu können. Aber auch entsprechende im entfernten Büro erstellte neue Nachrichten zum Aktualisieren empfangen zu können.

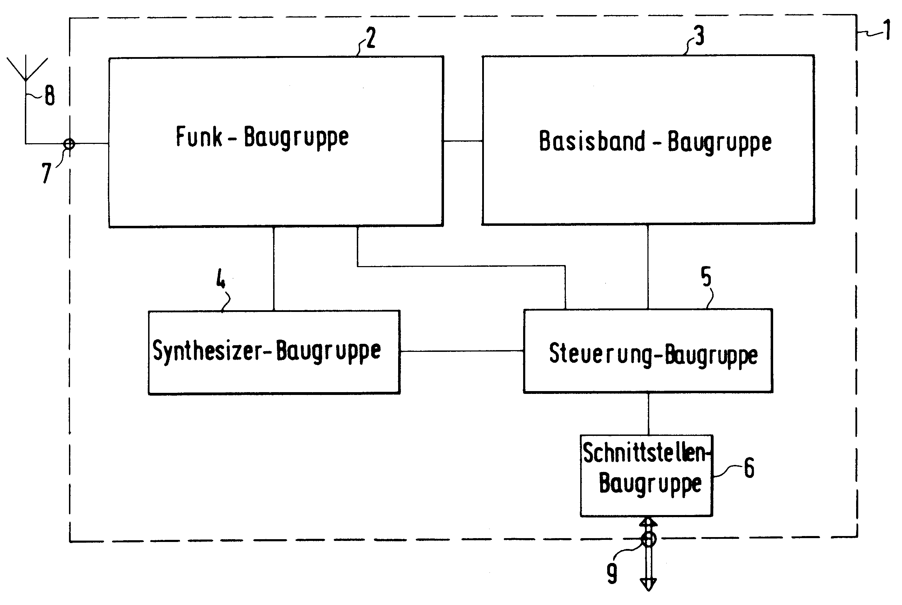

Die Erfindung wird nun anhand einer einzigen Figur näher erläutert.

Diese Figur zeigt ein Blockschaltbild eines erfindungsgemäßen Funk-Sende-Empfangsgerätes 1, das als Funkendgerät bezeichnet wird. Es hat eine Funk-Baugruppe 2, eine Basisband-Baugruppe 3, eine Synthesizer-Baugruppe 4, eine Steuerungs-Baugruppe 5 und eine Schnittstellen-Baugruppe 6.

An einem Anschluß 7, der mit der Funk-Baugruppe 2 verbunden ist, ist eine Antenne 8 angeschlossen. An einem Anschluß 9, der mit der Schnittstellen-Baugruppe verbunden ist, sind Peripherie-Geräte (Ein- und Ausgabegeräte) anschließbar.

Die Funk-Baugruppe 2 ist mit der Basisband-Baugruppe 3, der Synthesizer-Baugruppe 4 und der Steuerungs-Baugruppe 5 verbunden. Die Steuerungs-Baugruppe 5 ist außerdem jeweils mit der Basisband-Baugruppe 3, der Synthesizer-Baugruppe 4 und der Schnittstellen-Baugruppe 6 verbunden.

Die Funk-Baugruppe 2 filtert und verstärkt beim Empfang ein von der Antenne 8 kommendes Signal und erzeugt, moduliert und verstärkt beim Senden ein zu übertragendes Signal. Dafür enthält sie z.B. Frequenzumsetzer für eine Sende- und Empfangseinrichtung, eine Steuerung eines Leistungsverstärkers, einen Modulator und Analog/Digital-Wandler.

Die Basisband-Baugruppe 3 übernimmt die digitale Signalverarbeitung, die die Kanal-Codierung und -Decodierung umfaßt, und die Demodulation des von der Antenne 8 kommenden Signals. Dafür enthält sie z.B. einen Demodulator und einen Kanal-Coder/Decoder.

Die Steuerungs-Baugruppe 5 dient zur Steuerung der Funk-Baugruppe 2, der Signalverarbeitung in der Basisband-Baugruppe sowie zur Steuerung der Schnittstellen-Baugruppe 6.

Ein in der Synthesizer-Baugruppe 4 enthaltener Frequenzsynthesizer erzeugt die Trägerfrequenz für das zu sendende Signal.

Die Schnittstellen-Baugruppe 6, an die teilnehmerindividuelle Peripherie-Geräte angeschlossen sind, dient hier auch zur Aufnahme des Teilnehmer-Kennungsmoduls (engl.: Subscriber Identity Module, SIM), mit dem der Zugang zum GSM-Netz erfolgt.

Der Teilnehmer-Kennungsmodul kann auch von einer an die Schnittstellen-Baugruppe anschließbaren Einrichtung aufgenommen werden. Der Verbindungsaufbau zwischen einem Sender der Kurznachricht und einem Empfänger erfolgt in bekannter Weise.

Eine Energieversorgung, z.B. eine Batterie, für das Funkendgerät 1 ist nicht eingezeichnet; sie kann sich intern oder extern befinden. Befindet sich das Funkgerät in einem Fahrzeug, kann die Energieversorgung über das Bordnetz erfolgen.

Die in dem Funkendgerät 1 enthaltenen Baugruppen sind so ausgelegt, daß sie dem GSM-Standard für Kurznachrichten-Dienste entsprechen. Es ist demnach nur zur Übertragung von Kurznachrichten geeignet. Eine Nutzung des Telefondienstes ist nicht vorgesehen. Eine detailliertere Beschreibung der einzelnen Baugruppen ist der bereits genannten Literatur (J. Bursztejn) entnehmbar.

Gemäß einer weiteren Ausgestaltung des Gegenstandes der Erfindung kann das Funk-Sende-Empfangsgerät Paketdatennachrichten die gemäß einem GSM-Paketdatenfunkdienst (General Packet Radio Service, GPRS) im Nutzkanal übertragen werden, senden und empfangen. Dabei sind die in dem Funkgerät 1 enthaltenen Baugruppen so ausgelegt, daß sie die über Nutzkanäle ankommenden/abgehenden Paketdatennachrichten verarbeiten können.

Insbesondere wurde zur Übertragung von Paketdatennachrichten in GSM ein General Packet Channel GPCH definiert, der aus einem sogenannten Virtual Connection Indicator (VCI) (16Bit), einem Radio Link Protocol (RLP) Header und einem Feld für Paketdatennachrichten (23 Oktette) besteht.

Am Anschluß 9 des Funkendgerätes sind z.B. anschließbar: Computer, Displays, Tastaturen, Empfänger zur Positionsbestimmung, Drucker und eine Einrichtung zur Aufnahme des Teilnehmer-Kennungsmoduls.

Das Funkendgerät 1 kann selbstverständlich auch so gestaltet sein, daß in ihm die Peripherie bereits ganz oder teilweise enthalten ist. Es kann z.B. die Tastatur und/oder das Display im Funkendgerät integriert sein.

Eine Anwendung für ein solches Funkendgerät ist z.B. das Transportmanagement, bei dem von einer Zentrale aus mehrere Fahrzeuge überwacht und koordiniert werden. Die Fahrzeuge sind mit Funkendgeräten und Peripherie-Geräten ausgestattet. Die Zentrale übermittelt über das öffentliche Telefonnetz und über eine Kurznachrichtendienst-Zentrale zu den Fahrzeugen als Kurznachrichten z.B. Adressen, die angefahren werden sollen.

Die Adressen werden in den Funkendgeräten gespeichert, bis sie benötigt werden, so daß eine unmittelbare Bestätigung des Erhalts der Nachricht durch den Fahrer nicht notwendig ist. Ist ein Auftrag erledigt, sendet der Fahrer eine entsprechende Kurznachricht ebenfalls über die Kurznachrichtendienst-Zentrale an seine Zentrale. Er drückt zum Beispiel eine Funktionstaste, die mit der gewünschten Kurznachricht belegt ist. Beim Drücken der Funktionstaste erfolgt automatisch der Verbindungsaufbau.

Mit einem solchen Funkendgerät ist es möglich, daß sich jeder Teilnehmer seine individuellen Mittel zur Ein- und Ausgabe der Kurznachrichten anschließt. Das hier beschriebene Funkendgerät hat keine Anzeigeeinheit (z.B. ein Display) und keine Eingabeeinheit (z.B. eine Tastatur). Der Teilnehmer-Kennungsmodul kann von der Schnittstellen-Baugruppe aufgenommen werden oder von einer an diese anschließbaren Einrichtung.

Eine weitere Ausgestaltung des erfindungsgemäßen Funk-Sende-Empfangsgerätes besteht darin, daß die mit der Schnittstellen-Baugruppe 6 verbundene Steuerungs-Baugruppe 5 auf ein Software-Modul für Terminplaner/Notizbuch/Adreßbuchfunktionen zugreifen kann.

Ein solches Software-Modul kann entweder im Funkgerät 1 integriert sein oder aber extern über die Schnittstelle-Baugruppe 6 anschließbar sein. Besonders vorteilhaft ist es, die Schnittstelle-Baugruppe 6 als PCMCIA-Schnittstelle auszugestalten, um dann das Software-Modul als PCMCIA-Karte einfach anstecken zu können.

Eine Beschreibung einer PCMCIA-Karte (Modem) ist aus "Faxmodems im Scheckkartenformat" von C. Herwig, Funkschau 20/1993 bekannt.

Außerdem kann die Schnittstellen-Baugruppe 6 auch als serielle Schnittstelle ausgebildet sein. Über die Schnittstellen-Baugruppe 6 kann in vorteilhafter Weise ein das Software-Modul enthaltendes elektronisches Notizbuch oder aber auch die sogenannten PDAs (Persönlicher Digitaler Assistent) angeschlossen werden. Gerade ein solcher PDA ist speziell für alle Terminplan/Adreßbuch/Notizbuchfunktionen ausgelegt. (vgl. "Look and Feel", Apple Newton Messagepad, Funkschau 19/1993). Ein mit einem solchen Software-Modul verbundes Funk-Sende-Empfangsgerät 1 ist ferner über die Schnittstellen-Baugruppe 6 mit einer Ein-/Ausgabeeinheit verbunden. Dabei kann z.B. der PDA oder das elektronische Notizbuch als Ein-/Ausgabeeinheit verwendet werden. Die Ein-/Ausgabeeinheit kann aber auch in das Funkgerät integriert sein. Wenn nun ein Benutzer über die Ein/Ausgabeeinheit, gesteuert durch die Steuerungs-Baugruppe 5, Funktionen des Software-Moduls aufruft, um z.B. einen neuen Termin "Freitag, 22.Oktober 1994, 16 Uhr" und ggfls eine Notiz, "eine Konferenz mit ......"einzutragen, so wird dann erfindungsgemäß eine Funkverbindung mit einem entfernten Teilnehmerendgerät, z.B. einem mit dem Fernsprechnetz verbundener Personal Computer im entfernten Büro hergestellt. Das Herstellen einer Funkverbindung erfolgt in bekannter Weise mit Hilfe der in der Figur gezeigten Baugruppen 2,3,4,5 über die angeschlossene Antenne 8. Die neu erstellten Nachrichten werden dann zum Personal Computer übertragen, um der für ein entsprechendes Terminplan/Adreßbuch/Notizbuchfunktionen enthaltendes Software-Modul zur Verfügung zu stellen, um den Terminplan zu aktuallisieren. Dies hat den Vorteil, daß auch im Büro jederzeit aktuell die neuesten Nachrichten (Termine, Notizen, etc.) bekannt sind. Somit kann aber auch die Sekretärin aufgrund des immer aktuellen Standes der Termine jederzeit neue Termine aufnehmen und über eine Funkverbindung zum entfernten Funk-Sende-Empfangsgerät 1 übertragen, so daß auch diese neuen Termine abgespeichert sind und der Benutzer jeweils in Kenntnis der neuesten Terminlage agieren kann.

Außerdem kann der Benutzer jederzeit mittels des erfindungsgemäßen Funk-Sende-Empfangsgerätes eine Funkverbindung zum entferten Teilnehmerendgerät aufbauen, um die aktuellen Notizen, Termine etc. abzurufen. Es ist auch denkbar, daß automatisch zu vorgegebenen Zeiten eine Aktualisierung folgt.

Gemäß einer Weiterbildung der Erfindung können über die Schnittstellen-Baugruppe 6 auch Software-Module für sogenannte Kalenderdienste anschließbar sein. Insbesondere über eine PCMCIA-Karte können dann jegliche Programme geladen werden. Damit ist es möglich, auf spezielle Dienste per Funk von entsprechenden Kalenderdiensteanbietern zugreifen zu können, um z.B. aktuelle Veranstaltungskalender, Messekalender oder Kinokalender etc. abfragen zu können.

In einer besonders komfortablen Weise könnten dann auch z.B. Reservierungen oder Buchungen vorgenommen und bestätigt werden. Je nach Datenmenge kann ein Nachrichtenaustausch über Kurznachrichten (Short-Message-Service) oder in Form von Paketdaten erfolgen. Mit Hilfe des Paketdatendienstes sind insbesondere sogenannte Bearer-Dienste oder aber auch Faksimile-Übertragungen denkbar, wobei das erfindungsgemäße nur Funk-Sende-Empfangsgerät eine sehr kostengünstige Realisierung darstellt, da notwendige Ausgabemittel wie Drucker über die Schnittstellen-Baugruppe 6 ansschließbar sind.

Somit ist es auch möglich ein sehr kleines und kompaktes Funk-Sende-Empfangsgerät zu realisieren, das leicht überall hin mitgenommen werden kann.

## Patentansprüche

1. Funk-Sende-Empfangsgerät für Kurznachrichten,
das nach dem GSM-Standard für Kurznachrichten solche sendet und empfängt und das nur zur Kurznachrichten-Übertragung geeignet ist.

2. Funk-Sende-Empfangsgerät nach Anspruch 1,
das Anschlußmöglichkeiten für teilnehmerindividuelle Ein- und Ausgabegeräte hat.

3. Funk-Sende-Empfangsgerät nach Anspruch 2, das keine Anzeigeeinheit, keine Eingabeeinheit und keine Einrichtung zur Aufnahme eines Teilnehmer-Kennungsmoduls hat.

4. Funk-Sende-Empfangsgerät für Paketdatennachrichten entsprechend einen GSM-Paketdatenfunkdienst (General-Packet-Radio-Service, GPRS), welches nur zum Senden/Empfangen von über einen Nutzkanal übertragenen Paketdatennachrichten geeignet ist.

5. Funk-Sende-Empfangsgerät nach Anspruch 4, mit einer Steuerungs-Baugruppe (5), die mit einer Schnittstellen-Baugruppe (6) zum Verbinden von teilnehmerindividuellen Ein-und Ausgabegeräten, wie Drucker, Displays, Tastaturen, verbunden ist.

6. Funk-Sende-Empfangsgerät für Kurznachrichten (Short-Message-Service SMS) oder Paketdatennachrichten (General-Packet-Radio-Service GPRS), insbersondere für ein nach dem GSM-Standard arbeitendes zellulares Mobilfunknetz, mit einer Steuerungs-Baugruppe (5) und einer damit verbundenen Schnittstellen-Baugruppe (6) zum Ausführen von in einem Software-Modul enthaltenen Terminplaner/Notizbuch/Adreßbuchfunktionen und mit einer integrierten oder über die Schnittstellen-Baugruppe (6) anschließbaren Ein-/Ausgabeeinheit

7. Funk-Sende-Empfangsgerät nach Anspruch 6, mit Mitteln (2,3,4,5,8)zum Herstellen einer Funkverbindung mit einem Teilnehmergerät, zum Senden von Nachrichten, die aufgrund einer durch das Software-Modul ausgeführten Funktionen erstellt wurden oder zum Empfangen und Abspeichern von Nachrichten, die aufgrund einer Terminplaner/Notizbuch/Adreßbuchfunktion im entfernten Teilnehmergerät erstellt wurden.

8. Funk-Sende-Empfangsgerät nach Anspruch 6, bei dem die Schnittstellen-Baugruppe (6) eine PCMCIA-Schnittstelle ist, über die eine das Software-Modul enthaltende PCMCIA-Karte anschließbar ist.

9. Funk-Sende-Empfangsgerät nach Anspruch 6 oder 7, bei dem die Schnittstellen-Baugruppe (6) eine serielle Schnittstelle oder eine PCMCIA- Schnittstelle aufweist, an die ein elektronisches Notizbuch oder ein elektronischer, persönlicher Assistent (Personal Digital Assistant) anschließbar sind.

10. Funk-Sende-Empfangsgerät nach Anspruch 6 oder 7, bei dem über die Schnittstellen-Baugruppe (6) Software-Module für Dienste anschließbar sind, um mittels Kurznachrichten oder Paketdatennachrichten mit Kalenderdiensteanbietern Nachrichten austauschen zu können.
